# EUROPÄISCHE PATENTSCHRIFT

(11) **EP 2 117 881 B1**
(45) Veröffentlichungstag und Bekanntmachung des Hinweises auf die Patenterteilung: **13.10.2010**
(21) Anmeldenummer: 08707894.5
(22) Anmeldetag: 15.01.2008
(51) Int. Cl.: B60R 21/215

(54) **THERMOPLASTISCHE FOLIE FÜR AIRBAG-ABDECKUNGEN**
THERMOPLASTIC FILM FOR AIRBAG COVERS
FEUILLE THERMOPLASTIQUE POUR COUVERCLE DE COUSSIN GONFLABLE

(30) Priorität: 13.02.2007 DE 102007007619; 30.03.2007 DE 102007015765
(43) Veröffentlichungstag der Anmeldung: 18.11.2009
(73) Patentinhaber: Benecke-Kaliko AG, 30419 Hannover (DE); Johnson Controls Interiors GmbH & Co. KG, 47929 Grefrath (DE)
(72) Erfinder: BÜHRING, Jürgen Dr., 30900 Wedemark (DE); FISCHER, Katja, 96364 Marktrodach (DE); HÜLSEWEDE, Volker, 73114 Schlat (DE); MARQUARDT, Jürgen, 79104 Freiburg (DE); HARNISCH, Hartmut, 47929 Grefrath (DE)
(74) Vertreter: Finger, Karsten
(86) Internationale Anmeldenummer: PCT/EP2008/050357
(87) Internationale Veröffentlichungsnummer: WO 2008/098809

(56) Entgegenhaltungen:
- EP-A- 1 518 662
- EP-A- 1 745 989
- DE-A1- 10 055 546
- DE-A1- 10 244 311
- DE-A1- 19 533 367
- DE-A1- 19 636 428
- US-A- 5 863 064
- US-B1- 6 753 057

## Beschreibung

Die Erfindung betrifft eine thermoplastische Folie, insbesondere für Airbag-Abdeckungen für die Innenverkleidung von Kraftfahrzeugen, bestehend aus einer kompakten Deckschicht mit einer dreidimensional strukturierten Oberfläche, hergestellt z. b. durch das IMG-Verfahren, wie weiter unten beschrieben oder auch durch Prägeverfahren. Die Folie besitzt eine geschäumte Schicht auf der Unterseite, wird in einem formgebenden Verarbeitungsschritt auf einen der Bauteilform entsprechenden Träger aufgebracht und erhält dadurch ihre Bauteilform.

Thermoplastische Formteile, Formfolien oder - häute für die Innenverkleidung von Kraftfahrzeugen sind weithin bekannt und werden z. B. verwendet für die Innenverkleidung in Fahrzeugen, also als Überzug von Armaturenbrettern, Türeinsätzen, Sonnenblenden etc. eingesetzt. Solche Formteile bestehen üblicherweise aus einer mehrschichtigen unterschäumten Kunststoff-Folie, die auf ihrer Oberseite eine dreidimensional strukturierte, geprägte Oberfläche aufweist, nämlich eine so genannte Musterung oder Narbung in verschiedensten Formen und Ausführungen.

Die Formteile oder Formfolien bestehen aus einer kompakten Oberschicht, nämlich der Deck- oder Dekorschicht mit einer Shore-Härte von etwa Shore A 60 bis Shore D 50, die mit der geprägten oder eingeformten Oberfläche versehen ist, und aus einer auf der Unterseite auflaminierten / aufgeklebten Schaumschicht niedriger Dichte als Unterschicht, die eine ansprechende Haptik, d.h. eine angenehm "weiche" Griffigkeit des Bezuges bereitstellt. Dabei ist die Oberschicht auch als "Kompaktfolie" bekannt.

Sowohl die Oberschicht als auch die Unterschicht der Formteile /Formfolien können dabei aus unterschiedlichen Zusammensetzungen und unterschiedlichen Basisrohstoffen bestehen, also etwa aus Kunststoffen wie PVC (Polyvinylchlorid), PP (Polypropylen), TPO (Polyolefin) etc. oder einer Kombination aus solchen oder ähnlichen Materialien.

Im Stand der Technik sind zur Herstellung solcher Formhäute verschiedene Verfahren bekannt, zum Beispiel Walzverfahren zur Herstellung von "endlosen" Folienbahnen oder auch Verfahren zur Herstellung von werkzeugfallenden einzelnen Formhäuten. Ein Beispiel dafür ist das "Inmould-Graining-Verfahren (IMG-Verfahren)", welches sich als Spezialverfahren aus dem Negativ-Tiefziehverfahren entwickelt hat. Dieses Inmould-Graining-Verfahren, bisher im Wesentlichen mit seinem englischsprachigen Begriff bekannt, lässt sich wohl am besten mit dem Begriff " narbgebendes Negativtiefziehen" übersetzen. Im Gegensatz zum Standardtiefziehverfahren, bei dem das Einformen in die dreidimensionale, bauteil-geometrische Struktur durch das Einfahren eines die spätere Bauteilkontur bildenden Tiefziehstempels in die Folie erfolgt, wird beim Negativtiefziehen eine Folie in eine Negativform hineingezogen, beispielsweise durch Vakuum. Das narbgebende Negativtiefziehen ist dabei eine besondere Ausgestaltung des Negativtiefziehens, in dem nicht nur die bauteil-geometrische Struktur, sondern auch die spätere Narbstruktur als Negativ in die Werkzeugoberfläche eingebracht wird.

Die erfindungsgegenständliche Folie ist besonders geeignet für und ausgerichtet auf die Herstellung mit dem IMG Verfahren oder auch mit Walzverfahren oder Prägeverfahren.

Für das nachfolgende Aufbringen eines solchen Formteiles bzw. einer solchen Formfolie auf einen Armaturenbrett-Träger oder auf ein vorgefertigtes, z.B. aus faserverstärkter Pappe hergestelltes Trägerteil für einen Seitentür-Einsatz, kennt man neben dem Tiefziehen eine Reihe weiterer Umformverfahren, wie etwa Drück- oder Pressverfahren, bei denen die Folie gegen Formen bzw. gegen die genannten Träger gepresst wird und ihre Bauteilform erhält.

Eine solche Folie, d.h. ein solcher Formkörper besteht, wie oben bereits dargestellt, also aus einem Verbund von mehreren Schichten, wobei die Oberfolie eine dem Verarbeitungsverfahren angepasste Schmelzeviskosität hat und auch die geschäumte Unterfolie stabil ausgebildet ist. Der Einsatz einer solchen Folie als Abdeckung eines Trägers im Zusammenspiel mit den in heutigen Fahrzeugen serienmäßig vorhandenen Airbag-Auslösegeräten nur dann möglich, wenn die Folie, die z.B. das gesamte Armaturenbrett und damit auch die Abdeckungen über den Auslösegeräten des Airbags bedeckt, zum Aufreißen beim Entfalten des Airbags entlang einer Naht/Aufreißnaht geschwächt wird. Diese Schwächung erfolgt im Stand der Technik durch verschiedene Arten nachträglicher Bearbeitung.

Die DE 100 55 546 C2 offenbart hierzu ein Verfahren zur Erzeugung von entlang einer Sollbruchlinie verlaufenden Schwächungsstrukturen, bei dem auf der Rückseite der Airbag-Verkleidung / der thermoplastischen Folie mit einer Klinge als Schneid- und Stanzwerkzeug Aufreißnähte dadurch angeordnet werden, das die Klinge entlang einer Aufreißlinie verfahren und mit einer bestimmten Taktrate in die Airbag-Verkleidung eingestoßen und wieder herausgezogen wird.

Bekannt ist auch die Herstellung von Sollbruchlinien durch eine Laserstrahlbehandlung, bei dem ein Laserstrahl einen Teil der Foliendicke verbrennt bzw. schneidet. So offenbart die DE 196 36 428 A1 eine Vorrichtung, welche einen Laser zur Erzeugung von Schwächungsstrukturen in Form von Perforationslinien aufweist. Dabei werden in vorgegebenen Abständen Sacklöcher in die Airbagverkleidung eingebrannt.

Nachteilig ist in beiden offenbarten Verfahrensweisen, dass im Allgemeinen die rückseitig erzeugte Materialschwächung im Lauf der Zeit auch auf der Außenseite durch einen Material-Rückfall sichtbar wird.

Die EP 1 518 662 A1 zeigt eine gattungsgemäße Folie sowie ein Verfahren zur Herstellung einer Schwächungslinie in einer Airbag-Abdeckung, bei dem über eine auf die Abdeckung/Folie aufgesetzte Sonotrode eine Wärmeerzeugung durch Ultraschall erfolgt, die in einer textilen Außenschicht der Abdeckung eine mechanische Schwächung erzeugt, die aber die an sich vorhandene textile Oberflächenstruktur nur wenig stören soll, vermutlich dadurch, dass das Muster der Sollbruchlinie im Textilmuster nicht sonderlich auffällt. Bei z. B. Kunstlederoberflächen wäre hier jedoch eine deutlich auffällige Schwächungslinie zu erkennen.

Da im Bereich des Automobilinterieurs ein starker Trend zur Verbesserung der Qualitätsanmutung zu beobachten ist, sind weder die einen noch die anderen Unregelmäßigkeiten in den sichtbaren Oberflächenbereichen akzeptabel.

Der Erfindung lag die Aufgabe zugrunde, eine thermoplastische Folie bereitzustellen, die ohne Qualitätsverlust für Verformungsvorgänge, wie z.B. Tiefziehen geeignet ist, die eine hochwertige Anmutung der Oberfläche besitzt und auch ohne umfangreiche Zusatzbearbeitung im Bereich von Airbag-Auslösern einsetzbar ist.

Gelöst wird diese Aufgabe durch die Merkmale des Hauptanspruchs. Weitere vorteilhafte Ausbildungen sind in den Unteransprüchen offenbart. Ebenso wird ein Innenverkleidungsteil mit einer solchen Folie offenbart.

Dabei ist die Deckschicht mindestens zweilagig ausgebildet und besteht daher mindestens aus einer äußeren Lage und einer inneren, der geschäumten Schicht benachbarten Lage. Die innere Lage der Deckschicht und die geschäumte Schicht weisen eine Reißdehnung auf, die erheblich unterhalb der Reißdehnung der äußeren Lage der Deckschicht liegt. Dieser Aufbau führt dazu, dass bei ausgelöstem Airbag-Generator die Folie ohne Probleme aufreißt und ein Aufblasen des Airbags ermöglicht.

Im Stand der Technik war das bisher bei Folien ohne zusätzlich eingebrachte Schwächungslinien nicht gegeben. Spannt man nämlich eine normale Folie ohne geschwächte Querschnitt über eine Airbag-Öffnung und löst dann den Airbag aus, so wird die Airbag-Klappe vom Luftsack gegen den Schaum geschlagen, der dabei bricht. Beim herkömmlichen Schichtaufbau trifft im weiteren Verlauf die Klappe auf die kompakte und in der Regel einlagige Deckschicht, die aufgrund ihrer signifikant höheren Reißfestigkeit und Dehnfähigkeit nicht sofort bricht sondern zunächst verstreckt wird. Hierbei kommt es zu einer Abtrennung der oberen Schichten des Schaums von der Folie, was zur Folge hat, dass weiteres dehnfähiges Folienmaterial zur Verfügung steht. Damit wird die Strecke, die insgesamt gedehnt werden muss, bevor es zum Bruch kommt, und damit der zur Öffnung des Airbags benötigte Zeitraum deutlich länger: Bei Versuchen mit solchen Konstruktionen konnte bei Zug-Dehnungsuntersuchungen analog der DIN 527-3 beobachtet werden, dass nach dem Schaumbruch noch die Dehnung der Deckschicht auf Werte von bis zu 1200% der Ursprungsabmessungen stattfindet, bis dass die Folie reißt. Dies ist ungewünscht ist und hat im Fachbereich dazu geführt, Schwächungslinien einzubringen.

Mit der erfindungsgemäßen Ausbildung der Folie in einer Weise, dass die innere Lage der kompakten Deckschicht eine Reißfestigkeit und -dehnung aufweist, die deutlich unterhalb der Werte der äußeren Lage der kompakten Deckschicht liegt, kann man nun auf das Einbringen von Schwächungslinien verzichten, da es gelungen ist, das Reißen der Gesamtkonstruktion in dem Moment stattfinden zu lassen, in dem auch die geschäumte Schicht reißt.

Mit der beschriebenen dreilagigen Folie, einem so genannten Trilaminat, konnte in Zug-Dehnungsversuchen gemäß DIN 527-3 ein Verhalten beobachtet werden, welches den Anforderungen an die Ausbildung von Airbag-Deckfolien entspricht und eine signifikant geringe Reißdehnung der Gesamtkonstruktion aufweist. Durch eine solcherart gezielte Ausbildung der Schichten ergibt sich also insgesamt eine ebenso strukturstabile wie gleichmäßig nachgiebige Folie guter Anmutung und ohne sichtbaren Nahtrückfall im Material, die aufgrund ihres konstruktions- und materialbedingten Festigkeitsniveaus und Dehnungsverhaltens besonders geeignet für den Einsatz im Bereich von Airbag-Auslösegeräten ist.

Vorteilhafte Weiterbildungen bestehen darin, dass die Reißdehnung der inneren Lage bei Bruch in Längsrichtung kleiner oder gleich 600% und in Querrichtung kleiner oder gleich 500% der jeweiligen Ursprungsabmessung beträgt. Besonders geeignete Bereiche dieser Weiterbildung sind dadurch gekennzeichnet, dass die Reißdehnung der inneren Lage bei Bruch in Längsrichtung kleiner oder gleich 500%, vorzugsweise kleiner oder gleich 400% und in Querrichtung kleiner oder gleich 400%, vorzugsweise kleiner oder gleich 300% der jeweiligen Ursprungsabmessung beträgt. Insbesondere zusammen mit der vorteilhaften Ausbildung dergestalt, dass die Reißfestigkeit der inneren Lage in Längsrichtung und in Querrichtung 8 bis 25 MPa beträgt, vorzugsweise 10 bis 15 MPa, erreicht man bei den üblichen Foliendicken und Abmessungen ein ausgewogenes Reißverhalten bei gleichzeitig guter Einstellung der Folie auf eine für die genutzten Verformungsverfahren /Tiefziehverfahren ausreichende Strukturfestigkeit.

Dies wird durch eine weitere vorteilhafte Ausbildung unterstützt, bei der die einzelnen Lagen der kompakten Deckschicht eine Dicke von jeweils 0.2 bis 0.6 mm aufweisen, vorzugsweise eine Dicke von 0,2 bis 0,4 mm. Damit sind diese Folien auf der einen Seite noch nicht zu dünn, um beim IMG-Verfahren oder auch beim Positiv-Tiefziehen eine qualitativ gute Narbe zu erreichen und weisen auf der anderen Seite eine Dicke auf, die noch keine zu großen Auswirkungen auf die Materialkosten beinhaltet. Diese Foliendicken / Ausbildungen können natürlich mit den unterschiedlichsten Werkstoffen angepasst und hergestellt werden.

Eine weitere vorteilhafte Ausbildung besteht darin, dass die Reißdehnung der geschäumten Schicht bei Bruch in Längsrichtung kleiner oder gleich 400% und in Querrichtung kleiner oder gleich 300% der jeweiligen Ursprungsabmessung beträgt. Besonders geeignete Bereiche dieser Weiterbildung sind dadurch gekennzeichnet, dass die Reißdehnung der geschäumten Schicht bei Bruch in Längsrichtung kleiner oder gleich 300%, vorzugsweise kleiner oder gleich 200%, und in Querrichtung kleiner oder gleich 200%, vorzugsweise kleiner oder gleich 150% der jeweiligen Ursprungsabmessung beträgt.

Insbesondere im Zusammenspiel mit einer vorteilhaften Ausbildung der Dicke der geschäumten Schicht von 0,5 bis 4 mm ergibt sich eine präzise angepasste Auslegung des Reißverhaltens auf die üblichen Schichtdicken und Deckschichtmaterialien im Automobilbau. Unterstützt wird dies noch durch eine weitere vorteilhafte Ausbildung, die darin besteht, dass die geschäumte Schicht eine Dichte von 40 bis 300 kg/m³ aufweist, vorzugsweise eine Dichte von 40 bis 200 kg/m³. Eine solche Ausbildung erleichtert die Verarbeitung und die Herstellung der Folien wodurch sich ein ausgewogenes Verhältnis zwischen Flexibilität des Materials und erforderlicher Struktur-Festigkeit für das Tiefziehen und dem gewünschten Reißverhalten ergibt.

Besonders geeignet ist eine solche Folie zur Beschichtung eines Innenverkleidungsteil für ein Kraftfahrzeug, vorzugsweise Armaturenbrett, wobei die Deckfolie mindestens im Bereich der Airbag-Abdeckungen bzw. im Bereich der Aufreißnähte der Airbag-Abdeckungen in erfindungsgemäßer Weise mehrlagig ausgebildet ist Anhand eines Ausführungsbeispieles soll die Erfindung näher erläutert werden. Es zeigen:
- Fig. 1: den Aufbau einer erfindungsgemäßen thermoplastischen Folie
- Fig. 2: das Reiß- und Dehnungsverhalten von erfindungsgemäßen Folien in Längsrichtung im Vergleich zu einer Folie aus dem Stand der Technik
- Fig. 3: das Reiß- und Dehnungsverhalten von erfindungsgemäßen Folien in Querrichtung im Vergleich zu einer Folie aus dem Stand der Technik

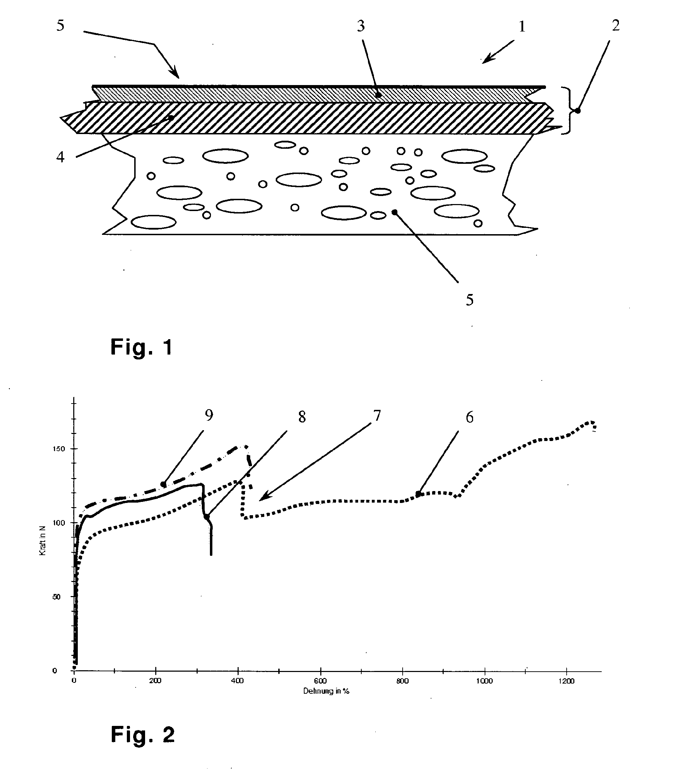

Die Fig. 1 zeigt den Aufbau einer thermoplastischen Folie 1 mit einer mehrschichtigen Deckschicht 2, die hier zweilagig ausgebildet ist, nämlich mit einer äußeren Lage 3 und einer inneren Lage 4, die der geschäumten Schicht 5 benachbart ist. Die Folie dient zur Verkleidung eines Kfz-Armaturenbrettes im Bereich des Beifahrer-AirBags.

Die innere Lage 4 der Deckschicht und die geschäumte Schicht 5 weisen eine Reißdehnung auf, die wesentlich unterhalb der Reißdehnung der äußeren Lage 3 der Deckschicht 2 liegt. Die thermoplastische Folie 1 ist mit einer geprägten dreidimensional strukturierten Oberfläche 5 auf ihrer äußeren Deckschicht versehen, also mit einer durch Walzprägung außen aufgeprägten Narbe.

Dabei besitzt die Deckschicht eine Gesamtdicke von 0,8 mm, die sich zusammensetzt aus der Dicke der unteren Lage 4 von 0,4 mm und der Dicke der oberen Lage 3 von ebenfalls 0,4 mm.

Die geschäumte Schicht 2 weist eine Schichtdicke von 2 mm auf.

Fig. 2 zeigt das bei einem Versuch ermittelte Reiß- und Dehnungsverhalten der erfindungsgemäßen Folie in Längsrichtung im Vergleich zu einer Folie aus dem Stand der Technik.

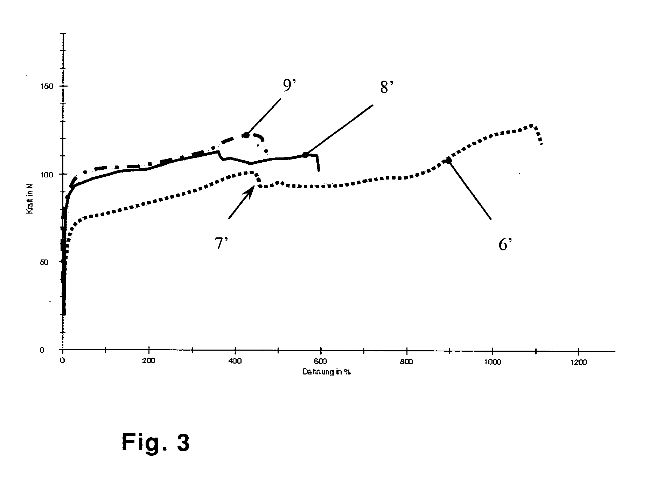

Fig. 3 zeigt die entsprechenden Ergebnisse des Reiß- und Dehnungsverhalten der erfindungsgemäßen Folie in Querrichtung.

Längs- und Querrichtung stehen dabei senkrecht aufeinander, wobei als Längsrichtung die Produktionsrichtung (Walzrichtung, Extrusionsrichtung) der Folie und als Querrichtung die Richtung senkrecht zur Produktionsrichtung definiert ist. Das hier gezeigte jeweilige Reiß- und Dehnungsverhalten beim Auslösen des Airbags bezieht sich im Übrigen auf die gesamte Folie, also auf das gesamte Folienlaminat aus zweilagiger Deckschicht und geschäumter Schicht, nicht etwa auf einzelne Lagen der Folie.

Die Kurve 6 zeigt hierbei das Reiß-Dehnungsverhalten einer Folie aus dem Stand der Technik in Längsrichtung anhand der Zug-Dehnungswerte, wobei die Zugkraft über der Dehnung aufgetragen ist. Die Kurve 6' zeigt die entsprechenden Werte für die Querrichtung. Deutlich erkennt man hier, dass nach dem Schaumbruch an der Stelle 7 (Längsrichtung) und 7' (Querrichtung) nach etwas über 400 % Dehnung noch die Dehnung der Deckschicht auf Werte von bis zu 1200 % steigt, bevor die Folie reißt.

Die Kurven 8 und 9 für die Längsrichtung sowie 8' und 9' für dieQuerrichtung zeigen jeweils das Reiß-Dehnungsverhalten zweier erfindungsgemäßer Folien, bei denen zum einen kein merkbarer Sprung beim Schaumbruch sichtbar ist und zum anderen das Reißen der Gesamtkonstruktion in dem Moment stattfindet, in dem der auch der Schaum reißt, nämlich bei Dehnungen in der Größenordnung von 300 bis 600%.

### Bezugszeichenliste

### (Teil der Beschreibung)

- 1: Thermoplastische Folie
- 2: Deckschicht
- 3: Äußere Lage der Deckschicht
- 4: Innere Lage der Deckschicht
- 5: Geschäumte Schicht
- 6: Reiß-Dehnungskurve einer Folie aus dem Stand der Technik, Längsrichtung
- 6': Reiß-Dehnungskurve einer Folie aus dem Stand der Technik, Querrichtung
- 7: Kurvenbereich beim Schaumbruch, Längsrichtung
- 7': Kurvenbereich beim Schaumbruch, Querrichtung
- 8: Reiß-Dehnungskurve, ersten erfindungsgemäße Folie, Längsrichtung
- 8': Reiß-Dehnungskurve, ersten erfindungsgemäße Folie, Querrichtung
- 9: Reiß-Dehnungskurve, zweite erfindungsgemäße Folie, Längsrichtung
- 9': Reiß-Dehnungskurve, ersten erfindungsgemäße Folie, Querrichtung

## Patentansprüche

1. Thermoplastische Folie (1), insbesondere für Airbag-Abdeckungen für die Innenverkleidung von Kraftfahrzeugen, bestehend aus einer kompakten Deckschicht mit einer dreidimensional strukturierten Oberfläche und einer geschäumten Schicht auf der Unterseite, **dadurch gekennzeichnet, dass** die Deckschicht (2) mindestens zweilagig ausgebildet ist mit einer äußeren Lage (3) und einer inneren, der geschäumten Schicht benachbarten Lage (4), wobei die innere Lage (4) der Deckschicht und die geschäumte Schicht (5) eine Reißdehnung aufweisen, die wesentlich unterhalb der Reißdehnung der äußeren Lage (3) der Deckschicht liegt.

2. Thermoplastische Folie nach Anspruch 1, **dadurch gekennzeichnet, dass** die Reißdehnung der inneren Lage (4) bei Bruch in Längsrichtung kleiner oder gleich 600% und in Querrichtung kleiner oder gleich 500% der jeweiligen Ursprungsabmessung beträgt.

3. Thermoplastische Folie nach Anspruch 2, **dadurch gekennzeichnet, dass** die Reißdehnung der inneren Lage (4) bei Bruch in Längsrichtung kleiner oder gleich 500%, vorzugsweise kleiner oder gleich 400% und in Querrichtung kleiner oder gleich 400%, vorzugsweise kleiner oder gleich 300% der jeweiligen Ursprungsabmessung beträgt.

4. Thermoplastische Folie nach Anspruch 1 bis 3, **dadurch gekennzeichnet, dass** die Reißfestigkeit der inneren Lage (4) in Lärigsrichtung und in Querrichtung 8 bis 25 MPa beträgt, vorzugsweise 10 bis 15 MPa.

5. Thermoplastische Folie nach Anspruch 1 bis 4, **dadurch gekennzeichnet, dass** die einzelnen Lagen (3, 4) der kompakten Deckschicht eine Dicke von jeweils 0.2 bis 0.6 mm aufweisen, vorzugsweise eine Dicke von 0,2 bis 0,4 mm.

6. Thermoplastische Folie nach Anspruch 1 bis 5, **dadurch gekennzeichnet, dass** die Reißdehnung der geschäumten Schicht (5) bei Bruch in Längsrichtung kleiner oder gleich 400% und in Querrichtung kleiner oder gleich 300% der jeweiligen Ursprungsabmessung beträgt.

7. Thermoplastische Folie nach Anspruch 6, **dadurch gekennzeichnet, dass** die Reißdehnung der geschäumten Schicht (5) bei Bruch in Längsrichtung kleiner oder gleich 300%, vorzugsweise kleiner oder gleich 200%, und in Querrichtung kleiner oder gleich 200%, vorzugsweise kleiner oder gleich 150% der jeweiligen Ursprungsabmessung beträgt.

8. Thermoplastische Folie nach Anspruch 1 bis 7, **dadurch gekennzeichnet, dass** die geschäumte Schicht (5) eine Dicke von 0.5 bis 4 mm aufweist.

9. Thermoplastische Folie nach Anspruch 1 bis 8, **dadurch gekennzeichnet, dass** die geschäumte Schicht (5) eine Dichte von 40 bis 300 kg/m³ aufweist, vorzugsweise eine Dichte von 40 bis 200 kg/m³.

10. Innenverkleidungsteil für ein Kraftfahrzeug, vorzugsweise Armaturenbrett, versehen mit einer thermoplastischen Folie nach Anspruch 1 bis 9, wobei die Deckfolie mindestens im Bereich der Airbag-Abdeckungen bzw. im Bereich der Aufreißnähte der Airbag-Abdeckungen mehrlagig ausgebildet ist.

## Claims

1. Thermoplastic film (1), in particular for airbag covers for the interior trim of motor vehicles, comprising a compact cover layer with a three-dimensionally structured surface and a foamed layer on the underside, **characterized in that** the cover layer (2) is of an at least two-ply form with an outer ply (3) and an inner ply (4) adjacent to the foamed layer, the inner ply (4) of the cover layer and the foamed layer (5) having an elongation at tear that is significantly below the elongation at tear of the outer ply (3) of the cover layer.

2. Thermoplastic film according to Claim 1, **characterized in that** the elongation at tear of the inner ply (4) when breaking in the longitudinal direction is less than or equal to 600% and in the transverse direction less than or equal to 500% of the respective original dimension.

3. Thermoplastic film according to Claim 2, **characterized in that** the elongation at tear of the inner ply (4) when breaking in the longitudinal direction is less than or equal to 500%, preferably less than or equal to 400%, and in the transverse direction less than or equal to 400%, preferably less than or equal to 300%, of the respective original dimension.

4. Thermoplastic film according to Claims 1 to 3, **characterized in that** the tearing resistance of the inner ply (4) in the longitudinal direction and in the transverse direction is 8 to 25 MPa, preferably 10 to 15 MPa.

5. Thermoplastic film according to Claims 1 to 4, **characterized in that** the individual plies (3, 4) of the compact cover layer have a thickness of in each case 0.2 to 0.6 mm, preferably a thickness of 0.2 to 0.4 mm.

6. Thermoplastic film according to Claims 1 to 5, **characterized in that** the elongation at tear of the foamed layer (5) when breaking in the longitudinal direction is less than or equal to 400% and in the transverse direction less than or equal to 300% of the respective original dimension.

7. Thermoplastic film according to Claim 6, **characterized in that** the elongation at tear of the foamed layer (5) when breaking in the longitudinal direction is less than or equal to 300%, preferably less than or equal to 200%, and in the transverse direction less than or equal to 200%, preferably less than or equal to 150%, of the respective original dimension.

8. Thermoplastic film according to Claims 1 to 7, **characterized in that** the foamed layer (5) has a thickness of 0.5 to 4 mm.

9. Thermoplastic film according to Claims 1 to 8, **characterized in that** the foamed layer (5) has a density of 40 to 300 kg/m³, preferably a density of 40 to 200 kg/m³.

10. A part for the interior trim of a motor vehicle, preferably a dashboard, provided with a thermoplastic film according to Claims 1 to 9, the cover film being of a two-ply form, at least in the region of the airbag covers or in the region of the tear-open seams of the airbag covers.

## Revendications

1. Film thermoplastique (1), notamment pour couvercle d'airbag pour le revêtement intérieur d'automobiles, constitué d'une couche supérieure compacte ayant une surface de structure tridimensionnelle et comportant une couche expansée sur le côté inférieur, **caractérisé en ce que** la couche supérieure (2) est formée au moins en deux couches avec une couche extérieure (3) et une couche intérieure (4) adjacente à la couche expansée, la couche intérieure (4) de la couche supérieure et la couche expansée (5) présentant un allongement à la rupture qui est sensiblement inférieur à l'allongement à la rupture de la couche extérieure (3) de la couche supérieure.

2. Film thermoplastique selon la revendication 1, **caractérisé en ce que** l'allongement à la rupture de la couche intérieure (4) lors d'une rupture dans la direction longitudinale est inférieur ou égal à 600 % et dans la direction transversale inférieur ou égal à 500 % de la mesure initiale respective.

3. Film thermoplastique selon la revendication 2, **caractérisé en ce que** l'allongement à la rupture de la couche intérieure (4) lors d'une rupture dans la direction longitudinale est inférieur ou égal à 500 %, de préférence inférieur ou égal à 400 %, et dans la direction transversale inférieur ou égal à 400 %, de préférence inférieur ou égal à 300 %, de la mesure initiale respective.

4. Film thermoplastique selon les revendications 1 à 3, **caractérisé en ce que** la résistance à la rupture de la couche intérieure (4) dans la direction longitudinale et dans la direction transversale est de 8 à 25 MPa, de préférence de 10 à 15 MPa.

5. Film thermoplastique selon les revendications 1 à 4, **caractérisé en ce que** les couches individuelles (3, 4) de la couche supérieure compacte présentent une épaisseur à chaque fois de 0,2 à 0,6 mm, de préférence une épaisseur de 0,2 à 0,4 mm.

6. Film thermoplastique selon les revendications 1 à 5, **caractérisé en ce que** l'allongement à la rupture de la couche expansée (5) lors d'une rupture dans la direction longitudinale est inférieur ou égal à 400 % et dans la direction transversale inférieur ou égal à 300 % de la mesure initiale respective.

7. Film thermoplastique selon la revendication 6, **caractérisé en ce que** l'allongement à la rupture de la couche expansée (5) lors d'une rupture dans la direction longitudinale est inférieur ou égal à 300 %, de préférence inférieur ou égal à 200 %, et dans la direction transversale inférieur ou égal à 200 %, de préférence inférieur ou égal à 150 %, de la mesure initiale respective.

8. Film thermoplastique selon les revendications 1 à 7, **caractérisé en ce que** la couche expansée (5) présente une épaisseur de 0,5 à 4 mm.

9. Film thermoplastique selon les revendications 1 à 8, **caractérisé en ce que** la couche expansée (5) présente une densité de 40 à 300 kg/m³, de préférence une densité de 40 à 200 kg/m³.

10. Pièce de revêtement intérieur pour automobile, de préférence tableau de bord, muni d'un film thermoplastique selon les revendications 1 à 9, le film supérieur étant formé en plusieurs couches au moins dans la zone des couvercles d'airbag ou dans la zone des joints d'ouverture des couvercles d'airbag.
